# EUROPÄISCHE PATENTSCHRIFT

(11) **EP 0 707 169 B1**
(45) Veröffentlichungstag und Bekanntmachung des Hinweises auf die Patenterteilung: **13.01.1999**
(21) Anmeldenummer: 95114029.2
(22) Anmeldetag: 07.09.1995
(51) Int. Cl.: F16L 11/127, F16L 9/12

(54) **Schlauch mit elektrisch leitfähiger Innenschicht sowie Verfahren zu seiner Herstellung**
Hose having an electrical conductive inner layer and method for its manufacture
Tuyau flexible avec une couche interne électroconductrice et procédé de sa fabrication

(30) Priorität: 15.10.1994 DE 4436971
(43) Veröffentlichungstag der Anmeldung: 17.04.1996
(73) Patentinhaber: PAGUAG Schlauchtechnik GmbH & Co. Kommanditgesellschaft, 40472 Düsseldorf (DE)
(72) Erfinder: Lüggert, Franz-Josef, D-44534 Lünen (DE)
(74) Vertreter: Lippert, Hans-Joachim, Dipl.-Ing.

(56) Entgegenhaltungen:
- DE-A- 2 944 858
- DE-A- 4 221 568
- DE-C- 3 202 854
- US-A- 3 070 132
- US-A- 5 036 210

## Beschreibung

Die Erfindung betrifft einen Schlauch zur Durchleitung fluider, pastöser oder partikelförmiger Medien, insbesondere im Lebensmittelbereich sowie im Bereich der Chemie oder Pharmazie, mit einer elektrisch leitfähigen Schicht aus Elastomere- oder Kunststoffmaterial oder deren Gemischen und mit einer an diese angrenzenden chemikalien- und lösungsmittelbeständigen Innenschicht, wobei die Innenschicht mindestens einen schmalen, in Längsrichtung des Schlauches durchgehenden elektrisch leitfähigen Streifen aufweist, der sich zumindest teilweise bis hin zur inneren Oberfläche der Innenschicht erstreckt und der zumindest teilweise mit der elektrisch leitfähigen Schicht in Berührung kommt. Darüber hinaus bezieht sich die Erfindung auf Verfahren zur Herstellung der oben genannten Schläuche.

Schläuche der genannten Art müssen eine ausreichende elektrische Leitfähigkeit aufweisen, um die beim Durchleiten der Medien entstehenden elektrostatischen Aufladungen abzuleiten. Diese könnten beim Transport entzündbarer Flüssigkeiten zur Selbstentzündung derselben oder zu Explosionen führen. Darüber hinaus würden elektrostatische Aufladungen bei partikelförmigen Medien dazu führen, daß die Schlauchinnenseiten durch anhaftende Partikel verunreinigt werden und daß die Abfüllung der Medien erschwert wird. Zur Erzielung einer ausreichenden Leitfähigkeit der Schlauchinnenschicht werden dieser elektrisch leitfähige Partikel wie z.B. Rußpartikel zugesetzt, so daß in radialer Richtung oder in Längsrichtung des Schlauches durchgehende Leitfähigkeitspfade mit spezifischen Widerstandswerten kleiner 10⁶ Ohm pro Meter entstehen. Aufgrund der Einsatzbereiche derartiger Schläuche sind an sie zusätzlich hohe Anforderungen bezüglich des Abriebverhaltens, der Chemikalienbeständigkeit sowie der Lebensmittelechtheit zu stellen. So dürfen die Transportgüter weder farblich beeinträchtigt noch durch Partikelabrieb verunreinigt werden. Dabei ist insbesondere eine permanente Leitfähigkeit zu gewährleisten, d.h. es ist sicherzustellen, daß die die elektrische Leitfähigkeit hervorrufenden Rußpartikel nicht durch Abrieb oder durch chemische Wechselwirkung mit den Medien entfernt werden. Desweiteren sind die Schlauchinnenschichten glatt und porenfrei auszuführen.

Schläuche der gattungsbildenden Art sind aus der DE-PS 32 02 854 bekannt, in der der elektrisch leitfähige Streifen in einer radial zur Schlauchleitung liegenden Ebene entlang einer Wellenlinie verläuft, deren zur Schlauchmitte gerichtete Wellenbögen sich bis zur inneren Oberfläche der Innenschicht erstrecken. Desweiteren kann eine elektrisch leitfähige Zwischenschicht vorgesehen sein, wobei die zur Schlauchaußenseite gerichteten Wellenbögen des elektrisch leitfähigen Elastomere- oder Kunststoffmaterials mit der Zwischenschicht in leitender Verbindung stehen. In einer weiteren Ausführungsform ist das elektrisch leitfähige Elastomere- oder Kunststoffmaterial in Form von mehreren über die Schlauchlänge verteilt angeordneten stift- oder zapfenförmigen Verbindungsstücken vorgesehen, die sich von der inneren Oberfläche der Innenschicht in radialer Richtung zu einem durchgehenden in Schlauchlängsrichtung verlaufenden Leiter erstrecken und mit diesem verbunden sind. Dadurch, daß das elektrisch leitfähige, in der Regel gummiartige Elastomere- oder Kunststoffmaterial die Innenschicht nur an einigen Stellen unterbricht, bleiben die mechanischen und chemischen Eigenschaften der Innenschicht weitestgehend erhalten. Die Herstellung eines derartigen Schlauchaufbaus ist jedoch vergleichsweise aufwendig. So ist die Einarbeitung eines in Längsrichtung des Schlauches durchgehenden, wellenförmig verlaufenden leitfähigen Streifens in den schichtenartigen Schlauchaufbau in den Produktionsprozeß nur schwer integrierbar und bedarf zusätzlicher Verfahrensschritte, Die Einarbeitung des elektrisch leitfähigen Materials in Form von stift- oder zapfenförmigen Verbindungsstücken gemäß der zweiten Ausführungsform bedarf zusätzlicher Fertigungsschritte wie z.B. dem des Einstanzen von Löchern in die Innenschicht.

Aus der DE-PS 29 44 858 ist bekannt, die Innenschicht von Schläuchen aus einer wendelig gewickelten mit dem Gummi der Schlauchwandung haftend verbundenen Polyethylenfolie auszuführen, wobei die Polyethylenfolie zumindest in Teilabschnitten ihres Querschnittes oder ihres Umfanges über die Schlauchlänge durchlaufend elektrisch leitfähig ausgebildet ist. Letzeres wird dadurch erreicht, daß ein Streifen eines mit leitfähigem Ruß gefüllten Polyethylens, dessen Stärke ca. ein Fünftel der Stärke der nicht leitfähigen Innenauskleidung beträgt, in schraubengangartigen Windungen auf die Innenoberfläche der Auskleidung aufgelegt und unter Druck mit dieser verschweißt wird. Zur Einarbeitung des elektrisch leitfähigen Streifens der Innenschicht ist somit auch hier ein zusätzlicher Arbeitsgang notwendig. Ein Ableiten der elektrischen Ladungen über den vergleichsweise dünnen und damit empfindlichen elektrisch leitfähigen Streifen erfolgt dadurch, daß an den Schlauchenden spezielle Kupplungsflansche vorgesehen sind, die über Kontaktklauen mit den in Schlauchrichtung durchgehenden innenliegenden Streifen elektrisch verbunden sind. Eine derartige Art der Ableitung ist jedoch vergleichsweise aufwendig und erfordert einen Eingriff in den Schlauchinnenbereich.

Aufgabe der vorliegenden Erfindung ist es daher, eine chemikalien- und lösungsmittelbeständige Innenschicht zu schaffen, die eine ausreichende elektrische Leitfähigkeit aufweist, ohne dadurch deren mechanische und chemische Eigenschaften zu beeinträchtigen, und die möglichst einfach und betriebssicher elektrisch kontaktierbar und leicht und mit geringem Aufwand herstellbar ist.

Erfindungsgemäß wird diese Aufgabe dadurch gelöst, daß die Innenschicht aus einem wendelförmigen, bündig oder überlappend gewickelten Folienband besteht, das thermoplastisch aufgeschmolzen und sowohl mit sich selbst als auch mit der nach außen angrenzenden elektrisch leitfähigen Schicht haftend verbunden ist, und daß der elektrisch leitfähige Streifen eine permanente Leitfähigkeit aufweist, homogen in das Folienband eingearbeitet ist und im wesentlichen aus dem gleichen Grundmaterial besteht wie das ihn umgebende Material des Folienbandes.

In dem erfindungsgemäßen Schlauch ist der elektrisch leitfähige Streifen homogen in die Innenschicht eingearbeitet. Dadurch ist eine mehr oder weniger aufwendige und damit zu Verarbeitungs- oder Produktionsfehlern führende Einarbeitung des Streifens in die Innenschicht in nachfolgenden Arbeitsschritten nicht mehr notwendig, was zu einer erhöhten Betriebssicherheit und Lebensdauer der erfindungsgemäßen Schläuche führt. Ein Auftreten von Bindefehlern, die aufgrund unterschiedlicher Materialeigenschaften bei der Verbindung unterschiedlicher Materialien (gummiartige elektrisch leitfähige Streifen/nicht leitendes Material der Innenschicht) leichter entstehen als bei der Verbindung gleichartiger Materialien (Verbindung des nicht leitenden Materials der Folienbahn mit sich selbst), wird bei den erfindungsgemäßen Schläuchen weitestgehend vermieden. Dementsprechend wird eine Schwächung des Materialverbandes sowohl in mechanischer Hinsicht, wie z.B. bezüglich Zugspannung, Biegefestigkeit und Abrieb, als auch in chemischer Hinsicht bezüglich der Chemikalien- und Lösungsmittelbeständigkeit durch den in das gleichartige, resistente Grundmaterial der Innenschicht homogenen eingearbeiteten elektrisch leitfähigen Streifen unterbunden. Zugleich wird so eine mechanische oder chemische Wechselwirkung der transportierten Medien mit dem elektrisch leitfähigen Material minimisiert, wodurch eine permanente Leitfähigkeit erzielt wird, die auch bei längerer Benutzung der Schläuche aufrecht erhalten wird. Durch den Aufbau der Innenschicht aus einem thermoplastisch mit sich selbst verbindbaren Folienband mit eingearbeitetem Streifen kann die Zahl der zu verbindenden Folienbahnen bzw. Streifen vermindert werden, wodurch zugleich auch eine glattere Innenschicht mit gleichmäßigerer Dicke und damit ein gleichmäßigerer Schlauchaufbau erzielbar ist.

Dadurch, daß das thermoplastisch aufschmelzbare Folienband mit der nach außen angrenzenden elektrisch leitfähigen Schicht haftend verbindbar ist, ist ein inniger Kontakt der sich bis zu der elektrisch leitfähigen Schicht hin erstreckenden Bereiche des elektrisch leitfähigen Streifens mit der angrenzenden Schicht möglich. Hierdurch werden die an der inneren Oberfläche der Innenschicht erzeugten elektrischen Ladungsträger bereits über kurze Bereiche der Schlauchlänge von der inneren Oberfläche der Innenschicht zu der angrenzenden elektrisch leitenden Schicht abgeleitet. Eine Ableitung über die gesamte Schlauchlänge innerhalb der mit dem zu transportierendem Medium in Berühung kommenden elektrischen Streifen wird somit vermieden.

Desweiteren ist eine zuverlässige Kontaktierung des erfindungsgemäßen Schlauches zur Ableitung der elektrostatischen Aufladung einfach durchführbar. So ist keine direkte Kontaktierung der in der Innenschicht angeordneten elektrisch leitfähigen Streifen notwendig, sondern lediglich eine Kontaktierung der an die Innenschicht nach außen hin angrenzenden elektrisch leitfähigen Schicht bzw. bei entsprechendem Schlauchaufbau eine Kontaktierung der Deckschicht. Diese Schlauchschichten sind jedoch mechanisch weitaus weniger empfindlich, als die zur Erreichung einer ausreichenden Biegeelastizität vergleichsweise dünn ausgeführten elektrisch leitfähigen Streifen.

Erstreckt sich der elektrisch leitfähige Streifen auf seiner gesamten Länge bis zu der inneren Oberfläche der Innenschicht und zu der nach außen angrenzenden elektrisch leitfähigen Schicht, so ist eine über die gesamte Länge des Schlauches gleichmäßige Ableitung der Ladungsträger zu der elektrisch leitfähigen Schicht hin gewährleistet, was eine erhöhte Betriebssicherheit des Schlauches darstellt.

Vorteilhafterweise besteht das die Innenschicht bildende Folienband aus hochmolekularem Polyethylen. Hierdurch sind sowohl die produktionstechnischen Vorteile des Polyethylens, wie z.B. seine thermoplastischen Eigenschaften nutzbar, als auch seine weitgehende Chemikalien- und Lösungsmittelbeständigkeit, die einen weiten Einsatzbereich der erfindungsgemäßen Schläuche ermöglicht.

Wird das Folienband weichmacherfrei ausgeführt, so ist eine durch verschiedene Lösungsmittel oder Chemikalien hervorgerufene Heraus lösung der Weichmacher unterbunden und damit eine weitgehende Alterungsbeständigkeit der erfindungsgemäßen Schläuche gewährleistet.

Weist das Folienband eine Dicke von ca. 0,5 mm auf, so ist noch eine ausreichend sichere Verarbeitbarkeit des die Innenschicht bildenden Folienbandes sowie eine ausreichende Abriebbeständigkeit gegeben, ohne daß Einbußen in der Biegeelastizität des Schlauches hinzunehmen wären.

Durch eine Einlagerung von Rußpartikel in die elektrisch leitfähigen Streifen kann auf einfache Weise eine ausreichend hohe elektrische Leitfähigkeit erzeugt werden.

Vorteilhafterweise verläuft der elektrisch leitfähige Streifen schraubenlinienförmig in der Innenschicht. Hierdurch ist gewährleistet, daß unabhängig vom Füllgrad des Schlauches stets das in ihm befindliche fluide, pastöse oder partikelförmige Medium mit dem elektrisch leitfähigem Streifen in Berührung kommt und somit eine sichere Ableitung der elektrischen Ladungsträger gewährleistet ist.

Der elektrisch leitfähige Streifen kann in der Mitte des Folienbandes angeordnet sein.

Zur Sicherstellung einer ausreichenden Betriebssicherheit des Schlauches ist es vorteilhaft, eine spezifische elektrische Leitfähigkeit des elektrisch leitfähigen Streifens und der nach außen angrenzenden Schicht von kleiner 10⁶ Ohm pro Meter einzuhalten.

Die nach außen an die Innenschicht angrenzende Schlauchschicht kann eine geringere Zugfestigkeit aufweisen, als weiter außen liegende Schlauchschichten. Hierdurch ist ein schrittweiser Übergang zwischen den Zugfestigkeiten aneinander grenzender Schlauchschichten möglich. Durch diese schrittweise Anpassung ist sowohl in fertigungstechnischer Hinsicht als auch bezüglich der Lebensdauer der Schläuche unter Zugspannung ein optimaler Schlauchaufbau gegeben.

Werden die nach außen an die elektrisch leitfähige Schicht angrenzenden Schichten, wie z.B. die Deckschicht des Schlauches, ebenfalls elektrisch leitend ausgeführt, so ist eine besonders effektive Ableitung der elektrischen Ladungsträger von der inneren Oberfläche der Innenschicht sowie eine besonders einfache Kontaktierung des elektrisch leitfähigen Streifens möglich.

Eine Herstellung der erfindungsgemäßen Schläuche kann nach einem der nachfolgend beschriebenen Verfahren ausgeführt werden.

Vorteilhafterweise kann eine Herstellung der erfindungsgemäßen Schläuche dadurch erfolgen, daß ein vorgefertigtes, einen durchgehenden elektrisch permanent leitfähigen Streifen aufweisendes Folienband wendelförmig, sich teilweise überlappend oder bündig auf einen Dorn aufgebracht wird und die überlappenden oder angrenzenden Bereiche unter Temperatur- und/oder Druckeinwirkung nahtlos verschmelzend miteinander verbunden werden, wobei auf der so erzeugten Innenschicht der weitere Schlauchaufbau erfolgt. Hierdurch ist der Aufbau der Innenschicht einschließlich des leitfähigen elektrischen Streifens in einem Arbeitsgang ausführbar. Eine homogene Einarbeitung des elektrisch leitfähigen Streifens erfolgt in vorgelagerten Fertigungsschritten, wobei eine gesonderte Qualitätsüberwachung bei der Herstellung des Folienbandes möglich ist und so die Herstellung gleichbleibender Schlauchqualitäten ermöglicht ist. Bei einer wendelförmigen überlappenden Aufbringung des Folienbandes auf einen Dorn ist eine einfache und dauerhafte Verbindung aufeinander folgender Wicklungen des Folienbandes möglich. Dadurch, daß eine Innenschicht, in die der elektrisch leitfähige Streifen bereits homogen eingearbeitet ist, separat hergestellt wird, können besonders gleichmäßige und in ihrer Qualität überwachbare Innenschichten hergestellt werden, bevor ein weiterer Schlauchaufbau stattfindet.

Alternativ können die erfindungsgemäßen Schläuche dadurch hergestellt werden, daß die Innenschicht in Form einer oder mehrerer Bahnen des elektrisch nicht leitenden Grundmaterials des Folienbandes wendelförmig so auf einen Dorn aufgebracht wird, daß zwischen den einzelnen Wicklungen ein Zwischenraum mit vorgegebenem Abstand entsteht, und daß in diesen Zwischenraum bündig oder überlappend Streifen des permanent elektrisch leitfähigen Materials eingebracht werden, die sowohl mit den seitlich angrenzenden Bahnen als auch mit dem sich nach außen hin anschließenden Schlauchmaterial unter Temperatur- und/oder Druckeinwirkung nahtlos verschmelzend miteinander verbunden werden, wobei der weitere Schlauchaufbau mittels bekannter Verfahren erfolgt. Hierdurch ist eine Herstellung des Folienbandes und der Innenschicht in einem Produktionsschritt möglich, wobei die Integration des Verfahrens in den Ablauf der Schlauchherstellung mittels bekannter Verfahren einfach durchführbar ist.

Die erfindungsgemäßen Schläuche sind darüber hinaus mittels eines Verfahrens herstellbar, bei dem ein Streifen des permanent elektrisch leitfähigen Materials zusammen mit dem elektrisch nicht leitenden Grundmaterial der Innenschicht mittels Koextrusion in Art eines Folienbandes auf einen Dorn aufgebracht wird, wobei der weitere Schlauchaufbau mittels bekannter Verfahren erfolgt. Auch nach diesem Verfahren ist eine Herstellung einer Innenschicht, die einen in Längsrichtung des Schlauches durchgehenden elektrisch leitfähigen Streifen aufweist in einem Produktionsschritt möglich. Das Folienband kann auch im gleichen Produktionsschritt direkt weiterverarbeitet werden.

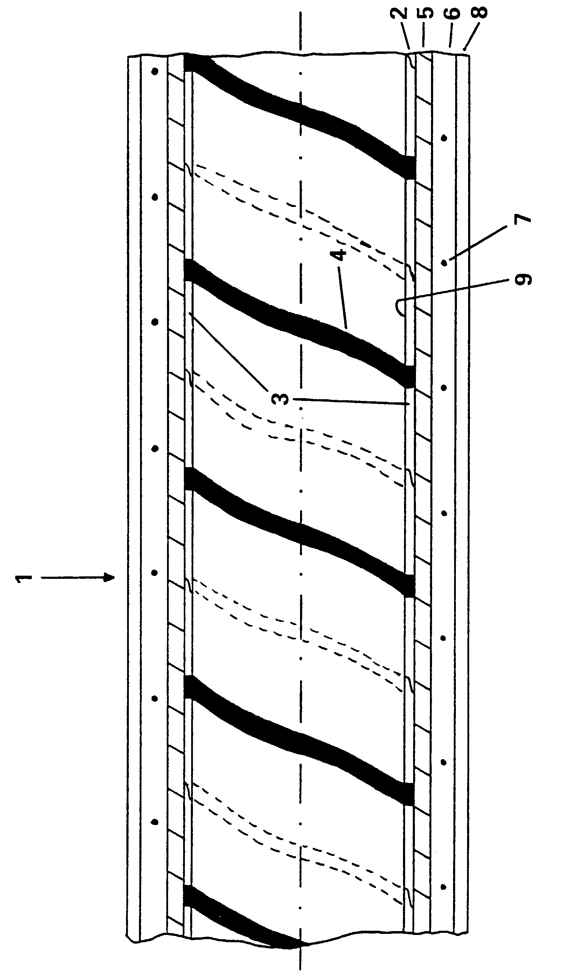

Die Erfindung ist in der Zeichnung beispielhaft veranschaulicht und im nachstehenden im einzelnen anhand der Zeichnung beschrieben, die einen Schnitt in Längsrichtung einer erfindungsgemäßen Schlauchleitung darstellt.

In der Zeichnung ist eine aus Elastomere- oder Kunststoffmaterial bestehende Schlauchleitung 1 dargestellt, die aus mehreren Schichten aufgebaut ist. So weist der Schlauch erfindungsgemäß eine Innenschicht 2 auf, die aus einem wendelförmigen überlappend gewickelten Folienband 3 besteht, das einen eingearbeiteten elektrisch leitfähigen Streifen 4 aufweist. Der überlappende Bereich ist in der Zeichnung durch eine gestrichelte Doppellinie dargestellt. Die Innenschicht 2 ist nach außen hin von einer elektrisch leitfähigen Schicht 5 umgeben, die die Innenschicht 2 auf ihrer gesamten äußeren Oberfläche haftend umschließt. An die elektrisch leitfähige Schicht 5 schließen sich nach außen hin eine Zwischenschicht 6, die zur Stabilisierung eine Stahldrahtwendel 7 aufweist, sowie eine Deckschicht 8 an.

In dem dargestellten Ausführungsbeispiel besteht das Folienband 3 aus hochmolekularem Polyethylen, in das längs eines Streifens zur Erzielung einer ausreichenden elektrischen Leitfähigkeit Rußpartikel eingelagert sind. Dabei erstreckt sich der Streifen 4 durchgehend durch den Querschnitt des Folienbandes 3 von der inneren Oberfläche 9 der Innenschicht bis hin zu der elektrisch leitfähigen Schicht 5. Die Verwendung von hochmolekularen Polyethylen bedingt, daß die Innenschicht 2 gegen die im Lebensmittelbereich und in den Bereichen der Chemie und Pharmazie gebräuchlichsten Chemikalien und Lösungsmittel wie z.B. alle gängigen Extraktionsmittel oder Alkohole beständig ist. Ebenso ist eine Beständigkeit von öl- und fetthaltigen Substanzen bis zu 50° C gewährleistet. Desweiteren ist eine Temperaturbeständigkeit im Bereich von -20° C bis +90° C im Dauerbetrieb gegeben. Da die Innenschicht 2 darüber hinaus weichmacherfrei ist, ist eine hohe Alterungsbeständigkeit auch gegenüber organischen Medien gewährleistet. Durch die Beschränkung des elektrisch leitfähigen Streifens 4 auf einen geringen Umfang der Schlauchinnenschicht besteht diese überwiegend aus weißgefärbtem Material, so daß eine farbliche Veränderung der transportierten Medien durch einen Abrieb der Innenschicht 2 vermieden wird.

In dem vorliegenden Ausführungsbeispiel erstreckt sich der elektrisch leitfähige Streifen 4 über die gesamte Dicke der Innenschicht 2, so daß er über seine gesamte Länge an die innere Oberfläche 9 der Schlauchinnenschicht sowie an die nach außen an die Innenschicht 2 angrenzende elektrisch leitfähige Schicht 5 angrenzt. Damit ist eine über die gesamte Schlauchlänge gleichmäßige Abführung von statischen Aufladungen in die äußeren Schlauchschichten gewährleistet, was die Betriebssicherheit des Schlauches im Falle statischer Aufladung erhöht.

Dadurch, daß der elektrisch leitfähige Streifen 4 hier aus dem gleichen Grundmaterial besteht wie die Innenschicht 2, nämlich aus hochmolekularem Polyethylen, ist ein weitestgehend homogener Materialübergang zwischen dem elektrisch leitfähigen Streifen 4 und dem angrenzenden Material der Innenschicht 2 gegeben. Hierdurch wird eine Materialschwächung der Innenschicht 2 vermieden, da keine abrupten Materialübergänge, die zu Bindefehlern führen könnten, auftreten. Derartige Bindefehler könnten zu verstärktem Abrieb in den Übergangszonen führen, da in diesen Bereichen eine größere Oberflächenrauigkeit vorliegt, als in den homogenen Bereichen der Innenschicht 2. Durch die Einbettung der die elektrische Leitfähigkeit der Streifen 4 hervorrufenden Rußpartikel in hochmolekulares Polyethylen wird sowohl aufgrund der chemischen Beständigkeit des Polyethylens als auch der spezifischen Wechselwirkung des Trägermaterials mit den eingelagerten Rußpartikeln ein Herauslösen der Rußpartikel durch agressive chemische Medien weitestgehend vermieden, wodurch zum einen eine hohe Reinheit der durchgeleiteten Medien aufrecht erhalten werden kann, zum anderen eine permanente, zeitlich konstante elektrische Leitfähigkeit des in der Innenschicht geführten Streifens 4 gewährleistet werden.

In dem vorliegenden Ausführungsbeispiel schließt sich an die elektrisch leitfähige Schicht 5 nach außen hin eine Zwischenschicht 6 an, die durch eine Stahldrahtwendel 7 stabilisiert wird. Dadurch wird ein flexibler Schlauchaufbau erzielt, der sowohl bei Unterdruck als auch bei Überdruck einsetzbar ist. Durch die Einfügung der Stahlradwendel 7 wird zudem eine von der Innenschicht 2 nach außen hin zunehmende Zugbeanspruchung der Schichten erreicht, wodurch fertigungstechnisch eine besonders günstige Abstimmung der mechanischen Eigenschaften aufeinander folgender Schlauchschichten gegeben ist. Die Deckschicht 8 ist ebenfalls elektrisch leitfähig ausgeführt, wodurch zur Ableitung der elektrostatischen Aufladungen eine einfache Kontaktierung der Deckschicht 8 ausreichend ist.

Die Herstellung der erfindungsgemäßen Schläuche kann dadurch erfolgen, daß ein vorgefertigtes Folienband 3, das einen durchgehenden elektrisch leitfähigen Streifen 4 aufweist, wendelförmig auf einen Dorn aufgebracht wird, so daß sich die angrenzenden Bereiche aufeinander folgender Wicklungen überlappen. Dabei ist sicherzustellen, daß der überlappende Bereich nicht den elektrisch leitfähigen Streifen 4 mit umfaßt. Der überlappende Bereich wird unter Temperatur- und Druckeinwirkung aufgeschmolzen und verdichtet, so daß eine nahtlose Verschmelzung der Randbereiche sowie eine glatte und porenfreie Oberfläche der Innenschicht 2 entsteht. Auf diesen vorgefertigten Bereich der Innenschicht 2 wird anschließend mittels bekannter Verfahren die elektrisch leitende Schicht 5 aufgebracht, wobei das Material dieser Schicht so gewählt ist, daß gegebenenfalls unter Zuhilfenahme von Haftvermittlern durch Temperatur- und Druckeinwirkung eine haftende Verbindung mit der Schlauchinnenschicht 2 herstellbar ist.

### Bezugszeichenliste

- 1: Schlauchleitung
- 2: Innenschicht
- 3: Folienband
- 4: elektrisch leitfähiger Streifen
- 5: elektrisch leitfähige Schicht
- 6: Zwischenschicht
- 7: Stahldrahtwendel
- 8: Deckschicht
- 9: innere Oberfläche

## Patentansprüche

1. Schlauch zur Durchleitung fluider, pastöser oder partikelförmiger Medien, insbesondere im Lebensmittelbereich sowie im Bereich der Chemie oder Pharmazie, mit einer elektrisch leitfähigen Schicht (5) aus Elastomere- oder Kunststoffmaterial und mit einer an diese angrenzenden chemikalien- und lösungsmittelbeständigen Innenschicht (2), wobei die Innenschicht (2) mindestens einen schmalen, in Längsrichtung des Schlauches durchgehenden elektrisch leitfähigen Streifen (4) aufweist, der sich zumindest teilweise bis hin zur inneren Oberfläche (9) der Innenschicht (2) erstreckt und der zumindest teilweise mit der elektrisch leitfähigen Schicht (5) in Berührung kommt, **dadurch gekennzeichnet,** daß die Innenschicht (2) aus einem wendelförmigen, bündig oder überlappend gewickelten Folienband (3) besteht, das thermoplastisch aufgeschmolzen und sowohl mit sich selbst als auch mit der nach außen angrenzenden elektrisch leitfähigen Schicht (5) haftend verbunden ist, und daß der elektrisch leitfähige Streifen (4) eine permanente Leitfähigkeit aufweist, homogen in das Folienband (3) eingearbeitet ist und im wesentlichen aus dem gleichen Grundmaterial besteht wie das ihn umgebende Material des Folienbandes (3).

2. Schlauch nach Anspruch 1, **dadurch gekennzeichnet,** daß der elektrisch leitfähige Streifen (4) auf seiner gesamten Länge sich bis zu der inneren Oberfläche (9) der Innenschicht (2) und zu der nach außen angrenzenden elektrisch leitfähigen Schicht (5) erstreckt.

3. Schlauch nach Anspruch 1 oder 2, **dadurch gekennzeichnet,** daß das die Innenschicht (2) bildende Folienband (3) aus hochmolekularem Polyethylen besteht.

4. Schlauch nach einem der Ansprüche 1 bis 3, **dadurch gekennzeichnet,** daß das Folienband (3) weichmacherfrei ist.

5. Schlauch nach einem der Ansprüche 1 bis 4, **dadurch gekennzeichnet,** daß das Folienband (3) eine Dicke von ca. 0,5 mm aufweist.

6. Schlauch nach einem der Ansprüche 1 bis 5, **dadurch gekennzeichnet,** daß in dem elektrisch leitfähigen Streifen (4) Rußpartikel eingelagert sind.

7. Schlauch nach einem der Ansprüche 1 bis 6, **dadurch gekennzeichnet,** daß der elektrisch leitfähige Streifen (4) schraubenlinienförmig in der Innenschicht (2) verläuft.

8. Schlauch nach einem der Ansprüche 1 bis 7, **dadurch gekennzeichnet,** daß der elektrisch leitfähige Streifen (4) in der Mitte des Folienbandes (3) angeordnet ist.

9. Schlauch nach einem der Ansprüche 1 bis 8, **dadurch gekennzeichnet,** daß die spezifische elektrische Leitfähigkeit des elektrisch leitfähigen Streifens (4) und der nach außen angrenzenden Schicht (5) kleiner 10⁶ Ohm pro Meter ist.

10. Schlauch nach einem der Ansprüche 1 bis 9, **dadurch gekennzeichnet,** daß die nach außen an die Innenschicht (2) angrenzenden Schicht (5) eine geringere Zugfestigkeit aufweist als weiter außen liegende Schlauchschichten.

11. Schlauch nach einem der Ansprüche 1 bis 10, **dadurch gekennzeichnet,** die nach außen an die elektrisch leitfähige Schicht (5) angrenzenden Schichten ebenfalls elektrisch leitend ausgeführt sind.

12. Verfahren zur Herstellung von Schläuchen nach einem der Ansprüche 1 bis 11 mit einer elektrisch leitfähigen Schicht (5) aus Elastomere- oder Kunststoffmaterial und einer an diese angrenzenden chemikalien- und Lösungsmittelbeständigen Innenschicht (2), die mindestens einen schmalen, in Längsrichtung des Schlauches durchgehenden elektrisch leitfähigen Streifen (4) aufweist, mit den Verfahrensschritten:
- ein vorgefertigtes Folienband aus thermoplastischem Material mit einem durchgehenden elektrisch permanent leitfähigen Streifen, der homogen in das Folienband eingearbeitet ist und im wesentlichen aus dem gleichen Grundmaterial besteht, wird wendelförmig, sich teilweise überlappend oder bündig auf einen Dorn aufgebracht,
- die überlappenden oder angrenzenden Bereiche des Folienbandes werden unter Temperatur- und/oder Druck einwirkung nahtlos verschmelzend miteinander verbunden,
- anschließend wird der weitere Schlauchaufbau hierauf aufgebaut, wobei die außen an die Innenschicht angrenzende Schlauchschicht haftend mit dieser verbunden wird, so daß der Streifen (4) sich zumindest teilweise bis hin zur inneren Oberfläche (9) der Innenschicht (2) erstreckt und zumindest teilweise mit der elektrisch leitfähigen Schicht (5) in Berührung kommt.

13. Verfahren zur Herstellung von Schläuchen nach einem der Ansprüche 1 bis 11, mit einer elektrisch leitfähigen Schicht (5) aus Elastomere- oder Kunststoffmaterial und einer an diese angrenzenden chemikalien- und Lösungsmittelbeständigen Innenschicht (2), die mindestens einen schmalen, in Längsrichtung des Schlauches durchgehenden elektrisch leitfähigen Streifen (4) aufweist, mit den Verfahrensschritten:
- die Innenschicht wird in Form einer oder mehrerer Bahnen des elektrisch nicht leitenden Grundmaterials des Folienbandes wendelförmig so auf einen Dorn aufgebracht wird, daß zwischen den einzelnen Wicklungen ein Zwischenraum mit vorgegebenem Abstand ensteht,
- in diesen Zwischenraum werden bündig oder überlappend Streifen des permanent elektrisch leitfähigen Materials eingebracht,
- die Streifen werden sowohl mit den seitlich angrenzenden Bahnen als auch mit dem sich nach außen hin anschließenden Schlauchmaterial unter Temperatur- und/oder Druckeinwirkung nahtlos verschmelzend verbunden, so daß der Streifen (4) sich zumindest teilweise bis hin zur inneren Oberfläche (9) der Innenschicht (2) erstreckt und zumindest teilweise mit der elektrisch leitfähigen Schicht (5) in Berührung kommt, anschliessend wird der weitere Schlauchaufbau aufgebaut.

14. Verfahren zur Herstellung von Schläuchen nach einem der Ansprüche 1 bis 11 mit einer elektrisch leitfähigen Schicht (5) aus Elastomere- oder Kunststoffmaterial und einer an diese angrenzenden chemikalien- und Lösungsmittelbeständigen Innenschicht (2), die mindestens einen schmalen, in Längsrichtung des Schlauches durchgehenden elektrisch leitfähigen Streifen (4) aufweist, mit den Verfahrensschritten:
- ein Streifen des permanent elektrisch leitfähigen Materials wird zusammen mit dem elektrisch nicht leitenden Grundmaterial der Innenschicht mittels Koextrusion in Art eines Folienbandes auf einen Dorn aufgebracht, so daß der Streifen (4) sich zumindest teilweise bis hin zur inneren Oberfläche (9) der Innenschicht (2) erstreckt und zumindest teilweise mit der nachfolgend aufgebauten elektrisch leitfähigen Schicht (5) in Berührung kommt,
- auf der so erzeugten Innenschicht werden weitere Schlauchschichten aufgebaut.

## Claims

1. A hose for conveying fluid, pasty or particulate media, especially in the foodstuffs sector and in the sector of chemistry or pharmacy, having an electrically conductive layer (5) of elastomeric or plastics material and having a chemical- and solvent-resistant inner layer (2) adjacent to the latter, the inner layer (2) having at least one narrow, electrically conductive strip (4) which runs through it in the longitudinal direction of the hose and which extends at least in parts as far as the inner surface (9) of the inner layer (2) and comes into contact at least in parts with the electrically conductive layer (5), characterised in that the inner layer (2) consists of a film band (3) which is wound helically in flush or overlapping relationship and which is thermoplastically melted on and joined adhesively both to itself and to the electrically conductive layer (5) adjoining it on the outside, and the electrically conductive strip (4) has a permanent conductivity, is homogeneously incorporated into the film band (3) and substantially consists of the same basic material as the material of the film band (3) surrounding it.

2. A hose according to claim 1, characterised in that the electrically conductive strip (4) extends over its entire length as far as the inner surface (9) of the inner layer (2) and as far as the electrically conductive layer (5) adjoining it on the outside.

3. A hose according to claim 1 or 2, characterised in that the film band (3) forming the inner layer (2) consists of high-molecular-weight polyethylene.

4. A hose according to any one of claims 1 to 3, characterised in that the film band (3) is free of plasticiser.

5. A hose according to any one of claims 1 to 4, characterised in that the film band (3) has a thickness of approximately 0.5 mm.

6. A hose according to any one of claims 1 to 5, characterised in that carbon black particles are embedded in the electrically conductive strip (4).

7. A hose according to any one of claims 1 to 6, characterised in that the electrically conductive strip (4) runs in the inner layer (2) in a helical line.

8. A hose according to any one of claims 1 to 7, characterised in that the electrically conductive strip (4) is arranged in the middle of the film band (3).

9. A hose according to any one of claims 1 to 8, characterised in that the electrical conductivity of the electrically conductive strip (4) and of the layer (5) adjoining it on the outside is less than 10⁶ ohms per metre.

10. A hose according to any one of claims 1 to 9, characterised in that the layer (5) adjoining the inner layer (2) on the outside thereof has a lower tensile strength than layers of the hose lying further towards the outside.

11. A hose according to any one of claims 1 to 10, characterised in that the layers adjoining the electrically conductive layer (5) on the outside thereof are likewise of an electrically conductive construction.

12. A process for the manufacture of hoses according to any one of claims 1 to 11 having an electrically conductive layer (5) of elastomeric or plastics material and a chemical- and solvent-resistant inner layer (2) which is adjacent to the latter and has at least one narrow, electrically conductive strip (4) running through it in the longitudinal direction of the hose, which process comprises the following process steps:
- a prefabricated film band of thermoplastic material having a permanently electrically conductive strip running through it which is homogeneously incorporated into the film band and substantially consists of the same basic material is arranged on a mandrel helically in partially overlapping or flush relationship,
- the overlapping or abutting regions of the film band are seamlessly joined together by fusion under the action of temperature and/or pressure,
- the further structure of the hose is then formed thereon, the layer of the hose adjoining the inner layer on the outside thereof being adhesively joined thereto, so that the strip (4) extends at least in parts as far as the inner surface (9) of the inner layer (2) and comes into contact at least in parts with the electrically conductive layer (5).

13. A process for the manufacture of hoses according to any one of claims 1 to 11 having an electrically conductive layer (5) of elastomeric or plastics material and a chemical- and solvent-resistant inner layer (2) which is adjacent to the latter and has at least one narrow, electrically conductive strip (4) running through it in the longitudinal direction of the hose, which process comprises the following process steps:
- the inner layer in the form of one or more webs of the electrically non-conductive basic material of the film band is arranged helically on a mandrel in such a manner that a gap of predetermined size is produced between the individual turns,
- strips of the permanently electrically conductive material are inserted into that gap in flush or overlapping relationship,
- the strips are seamlessly joined both to the webs adjoining them laterally and to the hose material adjoining them towards the outside by fusion under the action of temperature and/or pressure, so that the strip (4) extends at least in parts as far as the inner surface (9) of the inner layer (2) and comes into contact at least in parts with the electrically conductive layer (5),
- then the further hose structure is formed.

14. A process for the manufacture of hoses according to any one of claims 1 to 11 having an electrically conductive layer (5) of elastomeric or plastics material and a chemical- and solvent-resistant inner layer (2) which is adjacent to the latter and has at least one narrow, electrically conductive strip (4) running through it in the longitudinal direction of the hose, which process comprises the following process steps:
- a strip of the permanently electrically conductive material is arranged on a mandrel together with the electrically non-conductive basic material of the inner layer by means of co-extrusion in the manner of a film band, so that the strip (4) extends at least in parts as far as the inner surface (9) of the inner layer (2) and comes into contact at least in parts with the electrically conductive layer (5) which is next formed,
- further hose layers are formed on the inner layer so produced.

## Revendications

1. Tuyau flexible pour l'acheminement de produits fluides, pâteux ou à l'état de particules, notamment dans le domaine de l'industrie alimentaire ainsi que dans le domaine de la chimie ou de la pharmacie, comprenant une couche électriquement conductrice (5) en une matière élastomère ou une matière plastique et une couche intérieure (2) contiguë à cette dernière et résistante aux produits chimiques et aux solvants, la couche intérieure (2) comportant au moins un étroit ruban électriquement conducteur (4) continu dans le sens de la longueur du tuyau flexible, ruban qui s'étend, au moins en partie, jusqu'à la surface libre intérieure (9) de la couche intérieure (2) et qui vient en contact, au moins en partie, avec la couche électriquement conductrice (5), caractérisé en ce que la couche intérieure (2) se compose d'un film en bande hélicoïdal (3) enroulé en affleurement ou avec recouvrement, qui est soumis à une fusion thermoplastique et qui est relié par adhérence aussi bien à lui-même qu'à la couche électriquement conductrice (5) contiguë du côté extérieur, et en ce que le ruban électriquement conducteur (4) présente une conductibilité permanente, est encastré de façon homogène dans le film en bande (3) et est essentiellement constitué d'une matière de base qui est identique à la matière, qui l'entoure, du film en bande (3).

2. Tuyau flexible selon la revendication 1, caractérisé en ce que le ruban électriquement conducteur (4) s'étend sur sa longueur entière jusqu'à la surface libre intérieure (9) de la couche intérieure (2) et jusqu'à la couche électriquement conductrice (5) contiguë du côté extérieur.

3. Tuyau flexible selon la revendication 1 ou 2, caractérisé en ce que le film en bande (3), qui forme la couche intérieure (2), est en un polyéthylène de poids moléculaire élevé.

4. Tuyau flexible selon l'une des revendications 1 à 3, caractérisé en ce que le film en bande (3) est non plastifié.

5. Tuyau flexible selon l'une des revendications 1 à 4, caractérisé en ce que le film en bande (3) présente une épaisseur d'environ 0,5 mm.

6. Tuyau flexible selon l'une des revendications 1 à 5, caractérisé en ce que des particules de noir de carbone sont dispersées dans le ruban électriquement conducteur (4).

7. Tuyau flexible selon l'une des revendications 1 à 6, caractérisé en ce que le ruban électriquement conducteur (4) s'étend sous une forme hélicoïdale dans la couche intérieure (2).

8. Tuyau flexible selon l'une des revendications 1 à 7, caractérisé en ce que le ruban électriquement conducteur (4) est disposé au milieu du film en bande (3).

9. Tuyau flexible selon l'une des revendications 1 à 8, caractérisé en ce que la conductivité électrique du ruban électriquement conducteur (4) et de la couche (5), contiguë du côté extérieur, est inférieure à 10⁶ ohm par mètre.

10. Tuyau flexible selon l'une des revendications 1 à 9, caractérisé en ce que la couche (5), contiguë du côté extérieur à la couche intérieure (2), présente une résistance à la traction plus faible que des couches, situées plus à l'extérieur, du tuyau flexible.

11. Tuyau flexible selon l'une des revendications 1 à 10, caractérisé en ce que les couches contiguës, du côté extérieur, à la couche électriquement conductrice (5) sont également réalisées de façon à être électriquement conductrices.

12. Procédé pour fabriquer des tuyaux flexibles selon l'une des revendications 1 à 11, qui comprennent une couche électriquement conductrice (5) en une matière élastomère ou une matière plastique et une couche intérieure (2) contiguë à cette dernière et résistante aux produits chimiques et aux solvants, qui comporte au moins un étroit ruban électriquement conducteur (4) continu dans le sens de la longueur du tuyau flexible, procédé comprenant les étapes suivantes:
- un film en bande en matière thermoplastique, préalablement préparé, comportant un ruban continu électriquement conducteur de façon permanente, qui est encastré de façon homogène dans le film en bande et qui est essentiellement constitué de la même matière de base, est appliqué hélicoïdalement, avec recouvrement partiel ou en affleurement, sur un mandrin,
- les régions, qui se recouvrent ou qui se côtoient, du film en bande sont reliées l'une à l'autre par fusion, sans joint de soudure, sous l'effet de la température et/ou d'une pression,
- la structure restante du tuyau flexible est ensuite formée dessus, la couche du tuyau flexible, qui est contiguë du côté extérieur à la couche intérieure, étant alors reliée, par adhérence, à cette dernière, de telle sorte que le ruban (4) s'étende, au moins en partie, jusqu'à la surface libre intérieure (9) de la couche intérieure (2) et vienne en contact, au moins en partie, avec la couche électriquement conductrice (5).

13. Procédé pour fabriquer des tuyaux flexibles selon l'une des revendications 1 à 11, qui comprennent une couche électriquement conductrice (5) en une matière élastomère ou une matière plastique et une couche intérieure (2) contiguë à cette dernière et résistante aux produits chimiques et aux solvants, qui comporte au moins un étroit ruban électriquement conducteur (4) continu dans le sens de la longueur du tuyau flexible, procédé comprenant les étapes suivantes:
- la couche intérieure est appliquée hélicoïdalement sur un mandrin, sous forme d'une ou de plusieurs bandes de la matière de base, non conductrice de l'électricité, du film en bande, ceci d'une façon telle qu'il apparaisse, entre les enroulements individuels, un espace intercalaire d'écartement prédéfini,
- dans cet espace intercalaire, sont insérés, en affleurement ou avec recouvrement, des rubans de la matière électriquement conductrice de façon permanente,
- les rubans sont reliés par fusion, sans joint de soudure, aussi bien aux bandes, qui leur sont latéralement contiguës, qu'au matériau, adjacent du côté extérieur, du tuyau flexible, ceci sous l'effet de la température et/ou d'une pression, de telle sorte que le ruban (4) s'étende, au moins en partie, jusqu'à la surface libre intérieure (9) de la couche intérieure (2) et vienne en contact, au moins en partie, avec la couche électriquement conductrice (5),
- la structure restante du tuyau flexible est ensuite formée.

14. Procédé pour fabriquer des tuyaux flexibles selon l'une des revendications 1 à 11, qui comprennent une couche électriquement conductrice (5) en une matière élastomère ou une matière plastique et une couche intérieure (2) contiguë à cette dernière et résistante aux produits chimiques et aux solvants, qui comporte au moins un étroit ruban électriquement conducteur (4) continu dans le sens de la longueur du tuyau flexible, procédé comprenant les étapes suivantes:
- un ruban de la matière électriquement conductrice de façon permanente est, conjointement avec la matière de base, non conductrice de l'électricité, de la couche intérieure, appliqué par co-extrusion sur un mandrin, à la manière d'un film en bande, de telle sorte que le ruban (4) s'étende, au moins en partie, jusqu'à la surface libre intérieure (9) de la couche intérieure (2) et vienne en contact, au moins en partie, avec la couche électriquement conductrice (5) formée par la suite,
- d'autres couches du tuyau flexible sont formées sur la couche intérieure ainsi produite.
